# EUROPEAN PATENT SPECIFICATION

(11) **EP 1 813 783 B1**
(45) Date of publication and mention of the grant of the patent: **07.05.2008**
(21) Application number: 06256132.9
(22) Date of filing: 30.11.2006
(51) Int. Cl.: F01L 1/352

(54) **Cam phaser apparatus**
Vorrichtung für Nockenwellenversteller
Appareil de mise en phase d'arbre à cames

(30) Priority: 26.01.2006 GB 0601590
(43) Date of publication of application: 01.08.2007
(73) Proprietor: Delphi Technologies, Inc., Troy, Michigan 48007 (US)
(72) Inventor: Farah, Philippe-Said, 78600 Maisons-Laffitte (FR); Baur, Peter, 54295 Trier (DE)
(74) Representative: Waller, Stephen

(56) References cited:
- EP-A- 1 039 100
- EP-A- 1 039 101
- WO-A-20/04007919
- WO-A-20/05061861
- DE-A1- 4 110 195
- JP-A- 2 011 809

## Description

The present invention relates to a cam phaser apparatus, particularly, but not exclusively a variable cam phaser apparatus used in valve trains of automobile engines.

It is desirable to be able to adjust the cam phase (i.e. the angular relationship between the crankshaft and the camshaft) of engines during engine operation in order to vary the timing of the opening and closing of the inlet and/or exhaust valves to improve engine performance, emissions and/or fuel consumption. Various types of arrangements exist that are capable of achieving this adjustment. Such system are required to efficiently convert rotational movement from the crankshaft into rotational movement of the camshaft whilst allowing dislocation between these rotational movements in order to allow variation of the cam phase.

Current systems typically utilise hydraulic actuators using high pressure oil to enable relative angular displacement between drive and driven members (e.g. cam sprocket or pulley and camshaft) of the valve train. Such systems have difficulty operating at extremes of temperature, in particular during engine start up when the oil is cold, due to temperature related viscosity changes of the oil.

Whilst attempts have been made to design electrically actuated variable cam phase arrangement, such usually require a complex triple shaft arrangement such as planetary gears or a harmonic drive arrangement. The complex arrangement of such triple shaft systems can introduce controllability and reliability problems and generally suffer from high power consumption. Typically EP 1 039 100 shows such a system.

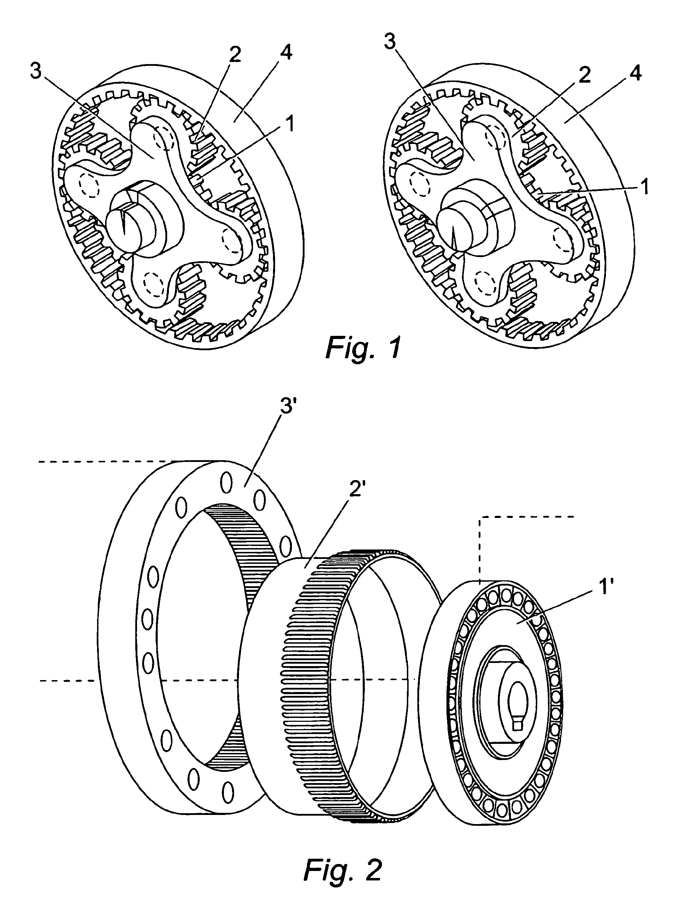

Examples of triple shaft gear systems suitable for use with a cam phaser comprise planetary gear systems (as shown in Fig. 1), with a sun gear 1 planetary gears 2 mounted on a planet carrier 3 and ring gear 4, or harmonic drive systems (as shown in Fig. 2), with a wave generator 1', flex-spline 2' and circular spline 3'.

Another form of triple member system equivalent to a planetary gear system comprises a magnetic gear having an outer ring comprising a plurality of magnets (equivalent to the ring gear), a concentric inner ring comprising a plurality of circumferentially spaced magnets (equivalent to a sun gear) and an intermediate ring or carrier member mounted in an annular space between said outer and inner rings and comprising a plurality of circumferentially spaced pole pieces (equivalent to planetary carrier upon which a plurality of planetary gears are mounted).

Typically, where such triple shaft gear systems are applied to a cam phaser of an engine, one shaft is connected to the cam sprocket or pulley to comprise a drive member (typically the planet carrier or circular spline) and a second shaft is connected to the camshaft (typically the ring gear or the flex-spline) to comprise a driven member, the remaining third shaft (typically the sun gear or wave generator) being connected to an actuator for varying the cam phase (i.e. the angular relationship between the drive and driven members).

A particular problem with such known triple shaft gear systems is that the position and/or angular velocity of the third shaft must be controlled at all times to prevent uncontrolled cam phase change. Hence the actuator, typically an electric motor, must be powered at all times, leading to increased power consumption.

According to the present invention there is provided a cam phaser apparatus comprising a triple member gear system, such as a planetary gear system, harmonic drive or magnetic gear, for transferring a driving torque from a drive member to a driven member and for selectively adjusting the angular relationship between the drive and driven members, said triple member gear system comprising a first member comprising a driving part of said triple member gear system, a second member comprising a driven part of said triple member gear system connectable to a cam sprocket or pulley, and a third member comprising an adjusting means of said triple member gear system connectable to a camshaft, said third member being connected to means for rotating said third member or applying a braking torque and/or a motoring torque to said third member to vary the angular relationship between the first and second members, wherein the cam phaser apparatus further comprises a selectively actuable coupling means for selectively coupling two of said first, second and third members.

By coupling two of the three member together, all three members are constrained to rotate synchronously, preventing alteration of the cam phasing.

Preferably said coupling means comprises a magnetic coupling, more preferably an electromagnetic coupling.

The coupling means may comprise first and second rotatably mounted coaxial members, a first member connected to one of said three members of the triple member gear system, a second member connected to another of said three members of the triple member gear system, said first and second members being spaced apart from one another, one of said first and second members comprising at least one magnetically conductive region and the other of said first and second members incorporating means for selectively generating a magnetic flux to constrain the first and second members to rotate together. Preferably said means for selectively generating a magnetic flux comprises a solenoid.

In one embodiment said first and second members of said coupling means respectively comprise concentrically arranged inner and outer rotors having a radial gap therebetween. In an alternative embodiment said first and second members of said coupling means comprise axially spaced members having respective axially spaced opposing face portions.

It is also envisaged that the coupling means may comprise a selectively actuable mechanical coupling, such as a mechanical clutch arrangement.

Embodiment of the present invention will now be described, by way of example only, with reference to the accompanying drawings, in which:
Fig. 3 is a schematic view of a cam phaser apparatus according to an embodiment of the present invention;
Fig. 4 is an exploded view of a magnetic coupling of a cam phaser apparatus according to a first embodiment of the present invention and;
Fig. 5 is a perspective view of a magnetic coupling according to a second embodiment of the present invention.

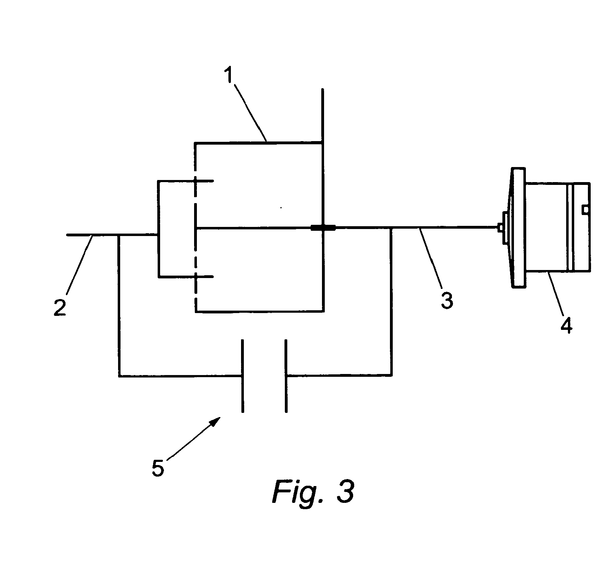

As illustrated in Fig 3, the cam phaser apparatus includes a first member 1 of a triple member gear system, said first member 1 being connected to a crankshaft of the engine via a pulley or cam sprocket and an endless belt or chain. In the case of a planetary gear system, such first member 1 could be the planet carrier and planetary gears. In the case of a harmonic drive, the first member 1 could be the circular spline. In the case of a magnetic gear, the first member 1 could be the intermediate ring or pole pieces.

The camshaft of the engine is connected to a second member 2 of the triple member gear system. In the case of a planetary gear system the second member 2 could be the ring gear. In the case of a harmonic drive, the second member 2 could be the flex-spline. In the case of a magnetic gear, the second member 2 could be the outer ring.

A third member 3 of the triple member gear system is connected to an electric motor 4 for altering the cam phase of the engine. In the case of a planetary gear system, the third member 3 could be the sun gear. In the case of a harmonic drive, the third member 3 could be the wave generator. In the case of a magnetic gear, the third member 3 could be the inner ring. The housing of the motor is fixed with respect to the cylinder head while the rotor of the motor rotates with the camshaft.

When it is desired to advance the cam phase of the camshaft, a braking torque is applied to the third member 3 by the electric motor 4 to decelerate the third member 3, thus advancing the camshaft angle with respect to the crankshaft.

When it is desired to retard the cam phase of the cam shaft, a motoring torque is applied to the third member 3 by the electric motor to accelerate the third member 3, thus retarding the camshaft angle with respect to the crankshaft.

When no advance is required it would formally have been necessary to maintain power to the motor 4 to ensure that the motor 4 compensates for the natural tendency of the motor to decelerate due to frictional losses. To avoid this, a magnetic coupling means 5 is provided between the second member 2 and the third member 3 to selectively couple the second and third members 2,3 together, causing all three member to rotate together at the same speed.

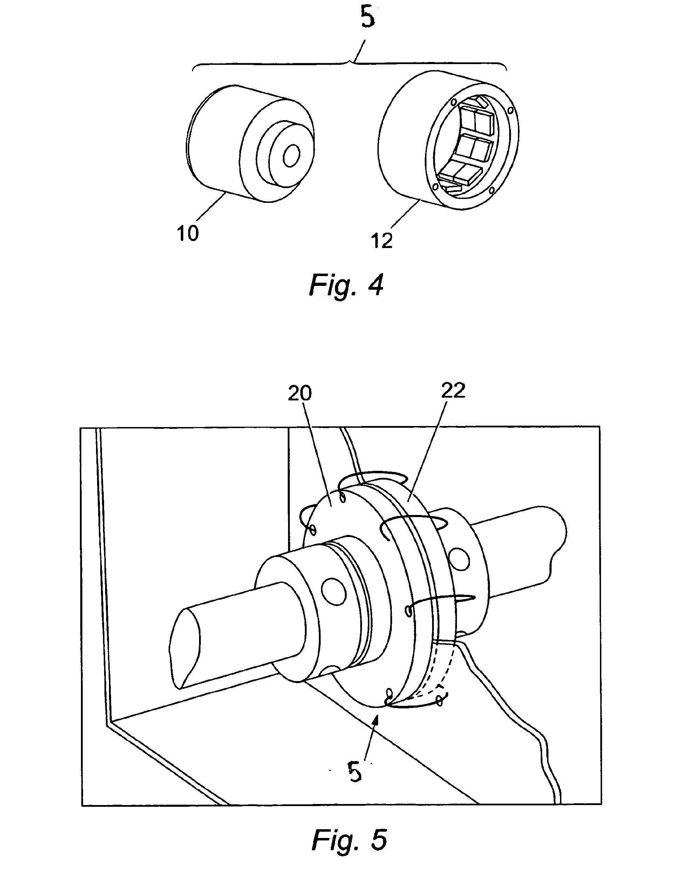

In a first embodiment, as illustrated in Fig 4, the magnetic coupling means 5 comprising an inner rotor 10 and a concentrically arranged outer rotor 12, an annular gap being defined between said inner and outer rotors 10,12 whereby the two rotors can rotate independently. The inner rotor 10 is connected to one of the second and third members (or possibly even the first member) and the outer rotor 12 is connected to the other of the second and third members. Both inner and outer rotors may comprise either permanent magnets or electromagnets through a electrically driven coil to generate magnetic flux interaction between the inner and outer rotors to transfer torque between the inner and outer rotors and lock the inner and outer rotors together.

In a second embodiment, as illustrated in Fig 5, the magnetic coupling means 5 comprises axially spaced first and second members 20,22 having respective face members axially spaced from one another to define cooperating face portions. Both discs will include either permanent magnets or electromagnets through a electrically driven coil to generate magnetic flux interaction between the inner and outer rotors to transfer torque between the inner and outer rotors and lock the inner and outer rotors together.

## Claims

1. A cam phaser apparatus comprising a triple member gear system, such as a planetary gear system, harmonic drive or magnetic gear, for transferring a driving torque from a drive member to a driven member and for selectively adjusting the angular relationship between the drive and driven members, said triple member gear system comprising a first member (1) comprising a driving part of said triple member gear system, a second member (2) comprising a driven part of said triple member gear system connectable to a cam sprocket or pulley, and a third member (3) comprising an adjusting means of said triple member gear system connectable to a camshaft, said third member (3) being connected to means for rotating (4) said third member or applying a braking torque and/or a motoring torque to said third member (3) to vary the angular relationship between the first and second members, **characterised in that** the cam phases apparatus further comprises a selectively actuable coupling means (5) for selectively coupling two of said first, second and third members.

2. A cam phaser apparatus as claimed in claim 1, wherein said coupling means (5) comprises a magnetic coupling, more preferably an electromagnetic coupling.

3. A cam phaser as claimed in any preceding claim, wherein the coupling means (5) comprises first and second rotatably mounted coaxial members (10,12), a first member (10,12) connected to one of said three members (1,2,3) of the triple member gear system a second member (10,12) connected to another of said three members (1,2,3) of the triple member gear system, said first and second members (10,12) being spaced apart from one another, one of said first and second members (10,12) comprising at least one magnetically conductive region and the other of said first and second members incorporating means for selectively generating a magnetic flux to constrain the first and second members to rotate together.

4. A cam phaser apparatus as claimed in claim 3, wherein said means for selectively generating a magnetic flux comprises a solenoid.

5. A cam phaser apparatus as claimed in claim 4, wherein said first and second members of said coupling means respectively comprise concentrically arranged inner and outer rotors having a radial gap therebetween.

6. A cam phaser as claimed in claim 4, wherein said first and second members of said coupling means comprise axially spaced members (20,22), having respective axially spaced opposing face portions.

7. A cam phaser as claimed in claim 1, wherein said coupling means may comprise a selectively actuable mechanical coupling.

## Patentansprüche

1. Eine Nockenwellenverstellervorrichtung, die ein Drei-Element-Getriebe wie etwa ein Planetengetriebe, ein Wellgetriebe oder ein Magnetgetriebe beinhaltet, zum Übertragen eines Antriebsdrehmoments von einem Antriebselement auf ein angetriebenes Element und zum selektiven Einstellen der Winkelbeziehung zwischen dem Antriebselement und dem angetriebenen Element, wobei das Drei-Element-Getriebe ein erstes Element (1), das einen antreibenden Teil des Drei-Element-Getriebes beinhaltet, ein zweites Element (2), das einen angetriebenen Teil des Drei-Element-Getriebes beinhaltet, welcher mit einem Nockenkettenrad oder einer Riemenscheibe verbunden werden kann, und ein drittes Element (3), das ein Einstellmittel des Drei-Element-Getriebes beinhaltet, welches mit einer Nockenwelle verbunden werden kann, wobei das dritte Element (3) mit einem Mittel zum Drehen (4) des dritten Elements oder zum Anwenden eines Bremsdrehmoments und/oder eines Motordrehmoments auf das dritte Element (3) verbunden ist, um die Winkelbeziehung zwischen dem ersten und dem zweiten Element zu variieren, beinhaltet, **dadurch gekennzeichnet, dass** die Nockenwellenverstellervorrichtung des Weiteren ein Kupplungsmittel (5), das selektiv betätigt werden kann, zum selektiven Kuppeln von zweien von dem ersten, zweiten und dritten Element beinhaltet.

2. Nockenwellenverstellervorrichtung gemäß Anspruch 1, wobei das Kupplungsmittel (5) eine magnetische Kupplung, noch besser eine elektromagnetische Kupplung beinhaltet.

3. Nockenwellenversteller gemäß einem der vorhergehenden Ansprüche, wobei das Kupplungsmittel (5) ein erstes und ein zweites Element (10,12), die drehbar montiert und koaxial sind, beinhaltet, wobei ein erstes Element (10,12) mit einem der drei Elemente (1, 2, 3) des Drei-Element-Getriebes verbunden ist, wobei ein zweites Element (10, 12) mit einem anderen der drei Elemente (1, 2, 3) des Drei-Element-Getriebes verbunden ist, wobei das erste und das zweite Element (10,12) voneinander mit Abstand angeordnet sind, wobei eines von dem ersten und dem zweiten Element (10,12) mindestens einen magnetisch leitenden Bereich beinhaltet und das andere von dem ersten und dem zweiten Element ein Mittel zum selektiven Erzeugen eines magnetischen Flusses inkorporiert, um das erste und das zweite Element dazu zu zwingen, sich gemeinsam zu drehen.

4. Nockenwellenverstellervorrichtung gemäß Anspruch 3, wobei das Mittel zum selektiven Erzeugen eines magnetischen Flusses eine Zylinderspule beinhaltet.

5. Nockenwellenverstellervorrichtung gemäß Anspruch 4, wobei das erste und das zweite Element des Kupplungsmittels einen inneren bzw. einen äußeren Rotor beinhalten, die konzentrisch mit einer dazwischen liegenden radialen Lücke angeordnet sind.

6. Nockenwellenversteller gemäß Anspruch 4, wobei das erste und das zweite Element des Kupplungsmittels axial mit Abstand angeordnete Elemente (20, 22) beinhalten, die jeweilige axial mit Abstand angeordnete, sich gegenüberliegende Flächenabschnitte aufweisen.

7. Nockenwellenversteller gemäß Anspruch 1, wobei das Kupplungsmittel eine mechanische Kupplung, die selektiv betätigt werden kann, beinhalten kann.

## Revendications

1. Un appareil formant dispositif de mise en phase de cames comprenant un système d'engrenage à trois éléments, tel qu'un système d'engrenage planétaire, un démultiplicateur harmonique ou engrenage magnétique, pour transférer un couple d'entraînement d'un élément d'entraînement à un élément entraîné et pour ajuster de façon sélective la relation angulaire entre l'élément d'entraînement et l'élément entraîné, ledit système d'engrenage à trois éléments comprenant un premier élément (1) comprenant une pièce d'entraînement dudit système d'engrenage à trois éléments, un deuxième élément (2) comprenant une pièce entraînée dudit système d'engrenage à trois éléments pouvant être raccordé à une poulie ou à un pignon de came, et un troisième élément (3) comprenant un moyen d'ajustement dudit système d'engrenage à trois éléments pouvant être raccordé à un arbre à cames, ledit troisième élément (3) étant raccordé à un moyen pour entraîner en rotation (4) ledit troisième élément ou appliquer un couple de freinage et/ou un couple moteur sur ledit troisième élément (3) pour faire varier la relation angulaire entre les premier et deuxième éléments, **caractérisé en ce que** l'appareil formant dispositif de mise en phase de cames comprend de plus un moyen de couplage (5) pouvant être actionné pour coupler de façon sélective deux éléments parmi lesdits premier, deuxième, et troisième éléments.

2. Un appareil formant dispositif de mise en phase de cames tel que revendiqué dans la revendication 1, dans lequel ledit moyen de couplage (5) comprend un couplage magnétique, de façon plus préférable un couplage électromagnétique.

3. Un dispositif de mise en phase de cames tel que revendiqué dans n'importe quelle revendication précédente, dans lequel le moyen de couplage (5) comprend un premier et un deuxième élément coaxial monté de façon à pouvoir tourner (10, 12), un premier élément (10, 12) raccordé à l'un desdits trois éléments (1, 2, 3) du système d'engrenage à trois éléments, un deuxième élément (10, 12) raccordé à un autre élément parmi lesdits trois éléments (1, 2, 3) du système d'engrenage à trois éléments, lesdits premier et deuxième éléments (10,12) étant espacés l'un de l'autre, l'un desdits premier et deuxième éléments (10, 12) comprenant au moins une région magnétiquement conductrice et l'autre élément parmi lesdits premier et deuxième éléments incorporant un moyen pour générer de façon sélective un flux magnétique afin de contraindre les premier et deuxième éléments à tourner ensemble.

4. Un appareil formant dispositif de mise en phase de cames tel que revendiqué dans la revendication 3, dans lequel ledit moyen pour générer de façon sélective un flux magnétique comprend un solénoïde.

5. Un appareil formant dispositif de mise en phase de cames tel que revendiqué dans la revendication 4, dans lequel lesdits premier et deuxième éléments dudit moyen de couplage comprennent respectivement des rotors interne et externe agencés de façon concentrique présentant un écart radial entre ceux-ci.

6. Un dispositif de mise en phase de cames tel que revendiqué dans la revendication 4, dans lequel lesdits premier et deuxième éléments dudit moyen de couplage comprennent des éléments espacés de façon axiale (20, 22) ayant des portions de face opposées espacées de façon axiale respectives.

7. Un dispositif de mise en phase de cames tel que revendiqué dans la revendication 1, dans lequel ledit moyen de couplage peut comprendre un couplage mécanique pouvant être actionné de façon sélective.
